# EUROPEAN PATENT APPLICATION

(11) **EP 2 080 993 A1**
(43) Date of publication of application: **22.07.2009**
(21) Application number: 07831574.4
(22) Date of filing: 09.11.2007
(51) Int. Cl.: G01D 5/20, B62D 1/20, B62D 5/04

(54) **ROTATION ANGLE DETERMINING APPARATUS**

(30) Priority: 10.11.2006 JP 2006306011
(71) Applicant: The Furukawa Electric Co., Ltd., Chiyoda-ku Tokyo 100-8322 (JP)
(72) Inventor: SAITO, Shinya, Chiyoda-ku Tokyo 100-8322 (JP); HASHIMOTO, Kyosuke, Chiyoda-ku Tokyo 100-8322 (JP); HORI, Shinji, Chiyoda-ku Tokyo 100-8322 (JP)
(74) Representative: Kleimann, Tobias
(86) International application number: PCT/JP2007/071843
(87) International publication number: WO 2008/056793

(57) **Abstract**

A rotation angle determining apparatus comprises an angle determining means that has determining circuits each including a determining element part consisting of a coil and a resistor and that also has an inductance changing means that changes the inductance of the coil in accordance with the rotation of a rotating object to be determined. The rotation angle determining apparatus further comprises a reference pulse voltage generating means (101) that causes the determining circuits (110,120) to generate output signals; and a calculating means that calculates the output signals of the determining circuits. In this rotation angle determining apparatus, a reference pulse voltage generated by the reference pulse voltage generating means is compared with the output voltages of the determining circuits developed when the reference pulse voltage is inputted to the determining circuits. The result of this comparison is used to calculate a rotation angle of the rotating object, thereby achieving a high degree of determination accuracy over a wide range of rotation angles even in an environment of dynamically changing temperature in spite of a reduced number of components constituting the rotation angle determining apparatus.

## Description

### TECHNICAL FIELD

This invention relates to a rotation angle detection device which can be suitably used for being fixed to a rotation body and detecting rotation angle of the rotation body.

### BACKGROUND ART

For example, a rotation angle detection device is used for being fixed to a rotation shaft such as a steering shaft of an automobile and detecting the rotation angle of a steering wheel integrated with the shaft.

As one example of the rotation angle detection device, there is the rotation angle detection device in which fixing cores are oppositely arranged with prescribed gap to the rotor (for example, refer to the Patent Document 1).

As shown in Patent Document 1, this rotation angle detection device comprises a rotor which is fixed to a rotating shaft, fixing cores including core body made from magnetic insulation material and at least one exciting coil received in the core body, and rotation angle detection member. The exciting coil consists of two exciting coils which are arranged so as to meet at the center of the rotor at a prescribed angle such as 90 ° in the circle direction of the rotor. And the fixing cores are fixed to the fixing materials in vicinity of the shaft and are respectively received in the case made from metal having insulating properties of alternating current magnetic field or magnetic insulating material with the rotor.

The rotor consists of a rotor fixing portion which is magnetic insulating material and a rotor shield member whose width is continuously varied in the circle direction and which is connected by the rotor fixing portion and a support portion. The rotor shield member consists of conductive metal including a narrow portion whose width is the narrowest and a wide portion whose width is the widest located on opposite side of the narrow portion in the radius direction, and is formed so that the width of the rotor shield member in the radius direction is varied corresponding to the rotation angle of the rotor and eddy current whose size corresponds to the width accompanied by the rotation is induced by alternating magnetic field. And in use of the rotation angle detection device having this configuration, the rotation angle of the rotation body is detected by utilizing the impedance variation of exciting coil accompanied by the generation of eddy current. Patent Document 1: Japanese Patent Application Publication 2003-202240(Page 4 - 5, FIG. 1)

### DISCLOSURE OF INVENTION

### PROBLEM TO BE SOLVED

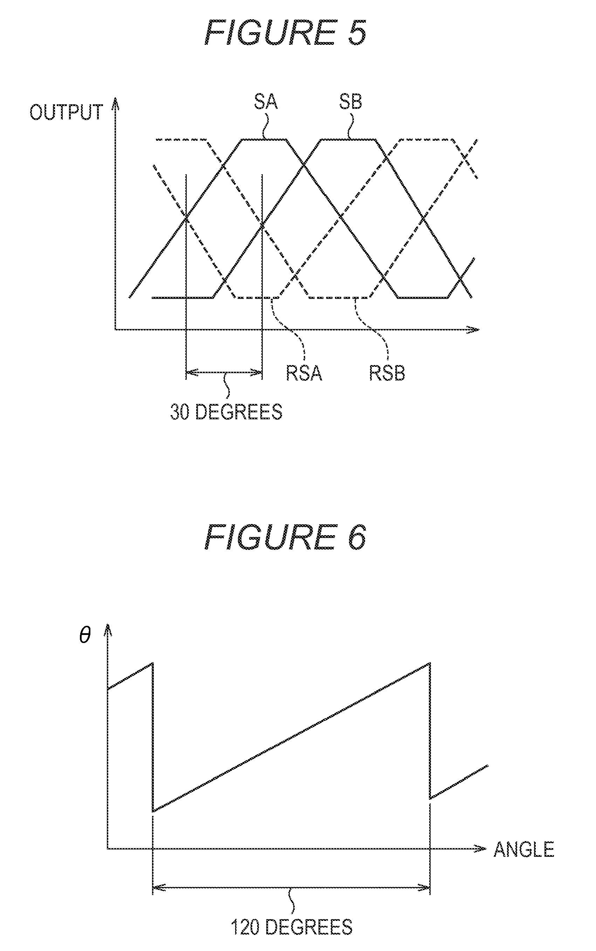

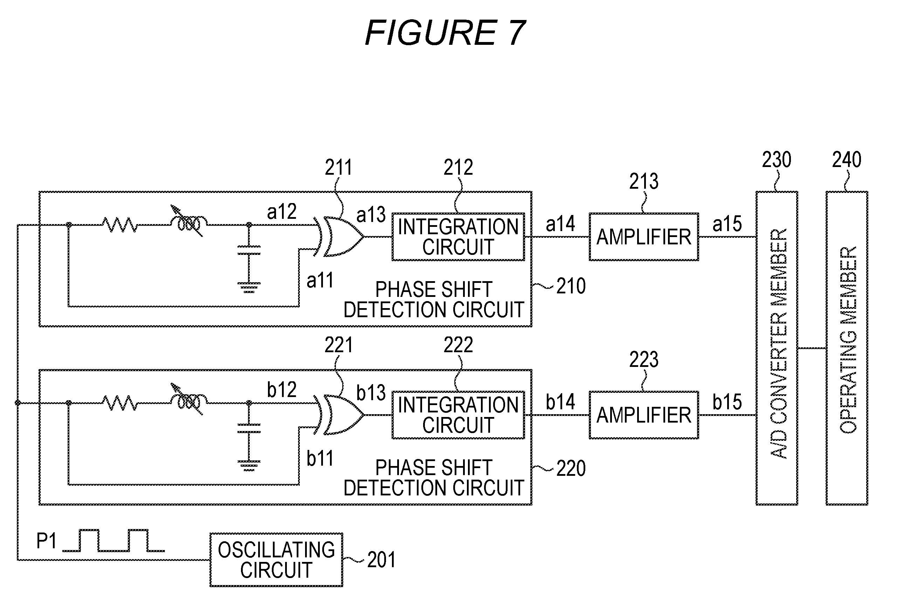

The angle detection method of the rotation angle detection device according to the prior art of the present invention is explained below based on FIG. 7. The circuit block diagram of this rotation angle detection device has a configuration shown in FIG. 7. This configuration is almost similar to the FIG. 5 of the Patent Document 1.

Specifically, rectangular reference pulse voltage P1 is generated by oscillating circuit 201 shown in the lower part of FIG. 7. The reference pulse voltage P1 generated by the oscillating circuit 201 is supplied to two phase shift detection circuits 210 and 220 respectively, and is used as basic signal for location detection.

As shown in the same figure, the phase shift detection circuit 210 comprises exciting coil oppositely arranged on one side of the rotor shield member in the circle direction, condensers mounted on the circuit board, exclusive-OR gate 211, and integration circuit 212, and the reference pulse voltage P1 at the point a11 directly added from the oscillating circuit 201 and the voltage at the point a12 having passed through the exciting coil are applied to the exclusive-OR gate 211. And the exclusive-OR of the voltages at the points a11 and a12 is taken by the exclusive-OR gate 211 and becomes the voltage at the point a13 which is integrated by the integration circuit 212 so that an analogue output signal at the point a14 is obtained. Then, the analogue output signal at the point a14 is amplified by amplifier 213 and becomes an analogue output signal at the point a15.

Similarly, another phase shift detection circuit 220 comprises exciting coil oppositely arranged on another side of the rotor shield member in the circle direction, condensers mounted on the circuit board, exclusive-OR gate 221, and integration circuit 222, and the reference pulse voltage P1 at the point b11 directly added from the oscillating circuit 201 and the voltage at the point b12 having passed through the exciting coil are applied to the exclusive-OR gate 221. And the exclusive-OR of the voltages at the points b11 and b12 is obtained by the exclusive-OR gate 221 and becomes the voltage at the point b13 which is integrated by the integration circuit 222 so that an analogue output signal at the point b14 is obtained. Then, the analogue output signal at the point b14 is amplified by amplifier 223 and becomes an analogue output signal at the point b15.

And two amplified analogue output signals a15 and b15 are added to A/D converter member 230, and are respectively sent to operating member 240 as direct detection voltages of digital signal and becomes location detection signals A and B (not depicted in FIG. 7) sequentially detecting respective angle locations of the steering shaft S described below.

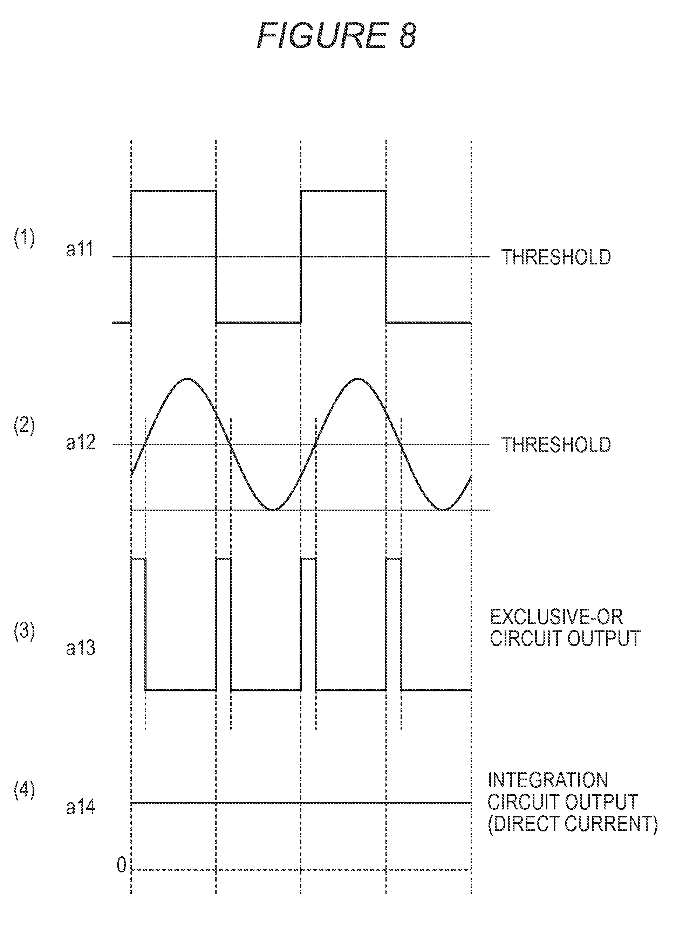

FIG. 8 shows timing chart of output voltage regarding to the phase shift detection circuit 210, (1) shows timing chart of the output voltage at the point a11 and (2) shows timing chart of output voltage at the point a12 in which center horizontal axis shows threshold value for dividing the voltage at the point a12 into the logical values of 0 or 1. And (3) shows timing chart of the output voltage at the point a13 and (4) shows timing chart of the output voltage at a14.

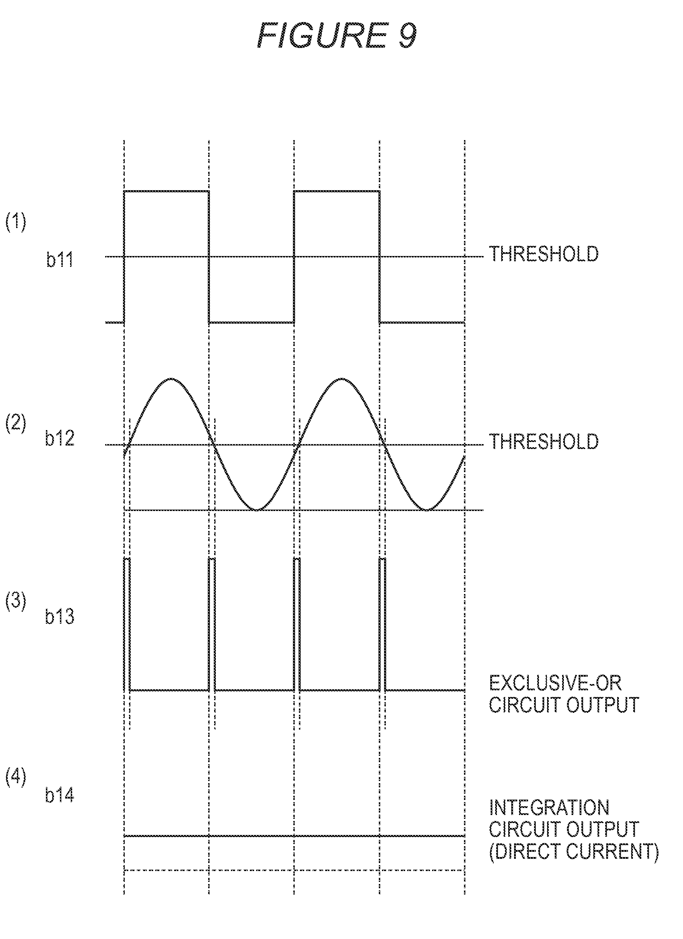

Similarly, FIG. 9 shows timing chart of output voltage regarding to the phase shift detection circuit 220, (1) shows timing chart of output voltage at the point b11 and (2) shows timing chart of the output voltage at the point b12 in which center horizontal axis shows threshold value for dividing the voltage at the point b12 into the logical values of 0 or 1. And (3) shows timing chart of the output signal at the point b13 and (4) shows timing chart of the output voltage at the point b14.

However, in the circuit configuration in which condensers are provided on the circuit board of the rotation angle detection device, since condensers having variations of initial properties or temperature properties depending on the change of temperature in vicinity of the rotation angle detection device are used in the detection circuits, accident error of detected angle is greatly caused by the change of temperature, and also a number of parts consisting of the rotation angle detection member are required and the circuit sensors cost much itself.

Furthermore, it is obvious from the timing chart (2) in FIG. 8 and 9, since the voltages shows sin wave at the point a12 and b12, the phases of the sin wave are varied by the change of temperature in vicinity of the rotation angle detection device in addition to the temperature properties of the condensers and accident error is easily caused when the exclusive-OR is taken from the voltage at the point a 12 and the voltage at the point a13.

Accordingly, in the case that this kind of rotation angle detection device is required to be used under the circumstances that the change of temperature is great such as being attached to vehicles, variation of initial properties of condensers mounted or deviation of output properties of the condensers accompanied by the change of temperature can not be ignored, and causes a problem that high accuracy of output properties in rotation angle detection of the steering shaft S can not be obtained.

The purpose of the present invention is to provide the rotation angle detection device which retains high detection accuracy in wide range of the rotation angle even under the circumstances that the change of temperature is great.

### MEANS TO SOLVE THE PROBLEM

To solve the problems described above, the rotation angle detection device according to the present invention is a rotation angle detection device, comprising angle detection means including detection circuits including detection element members consisting of coils and resistances, inductance changing means for changing inductance of said coils corresponding to rotation of a rotation body to be measured, and, furthermore comprising reference pulse voltage generating means for making said detection circuits generate output signals and operating means for calculating output signals of said detection circuits, wherein reference pulse voltage generated by said reference pulse voltage means and output voltages of said detection circuits output when said reference pulse voltage is input are compared for calculating rotation angle of said rotation body to be measured.

In the rotation angle detection device according to the present invention, serial resonance circuits consisting of the resistances, the coils and the condensers are not provided as the detection element members, the rotation angle is detected based on the comparison between the outputs of the detection circuits including the detection element members in which the resistances and the coils are assembled and the voltage of the reference pulse.

Accordingly, the condensers being factors of accident error of the output signal caused by the variation of initial properties or the change of temperature need not to be used, and accident error of the rotation angle caused by the change of temperature in vicinity of the rotation angle detection device can be minimized. As a result, the rotation angle can be detected with stable accuracy even when the rotation angle detection device is used under the circumstances that the change of temperature is great such as being attached to vehicles.

Furthermore, in the rotation angle detection device comprising resonance circuits consist of RLC circuits as detection element members for detecting the rotation angle, the resonance pulse voltages after passing through the RLC circuits show sin wave whose phase is easily varied by the temperature properties of the condensers, and accident error of the rotation angle detection is caused, however, in the present invention, since the detection circuits consisting of RL circuits as detection element members instead of the RLC circuits are provided, the voltage wave obtained after the reference pulse voltage passes through the RL circuit is digitally risen at the same time as the reference pulse is risen, and, accordingly, it is possible to avoid effect of the change of temperature in vicinity of the rotation angle detection device

And, since the condensers are not used, it is possible to reduce the number of parts, and, since factors causing accident errorof the output signals of the detection circuits are reduced, it is also possible to simplify the logical circuits and the amplifiers and to achieve the cost down of the rotation angle detection device.

### BRIEF DESCRIPTION OF THE DRAWINGS

FIG. 1 shows plan view of interior configuration of the rotation angle detection device according to one embodiment of the present invention with the upper cover removed.
FIG. 2 shows the circuit block diagram of the rotation angle detection member of the rotation angle detection device shown in FIG. 1.
FIG. 3 shows the timing chart for explaining the way of detection process of the rotation angle in the rotation angle detection member regarding to the one coil member shown in FIG. 1.
FIG. 4 shows the timing chart for explaining the way of detection process of the rotation angle in the rotation angle detection member regarding to the coil member different from FIG. 3.
FIG. 5 shows the output properties diagram of detection outputs obtained in FIG. 3 and FIG. 4 with the rotation angle of the steering shaft shown in the horizontal axis and with the output obtained by the rotation angle detection member respectively corresponding to the coil members respectively corresponding to the rotation angles shown in the vertical axis.
FIG. 6 shows the output properties diagram in a saw blade shape obtained by respectively processing the signals of the output properties in the output properties diagram shown in FIG. 5 with the rotation angle of the steering shaft shown in the horizontal axis and with the output obtained by the rotation angle detection member shown in the vertical axis.
FIG. 7 shows the circuit block diagram of the rotation angle detection member of the conventional rotation angle detection device.
FIG. 8 shows the timing chart for explaining the way of detection process of the rotation angle in the rotation angle detection member regarding to the one coil member of the conventional rotation angle detection device.
FIG. 9 shows the timing chart for explaining the way of detection process of the rotation angle in the rotation angle detection member regarding to another coil member different from FIG. 8.

### DESCRIPTION OF THE PREFERRED EMBODIMENT

The rotation angle detection device according to one embodiment of the present invention is explained below based on the figures. In this explanation, the case that, in the steering device of an automobile, the rotation angle detection device is attached to the steering shaft for detecting the rotation angle of a steering wheel is explained.

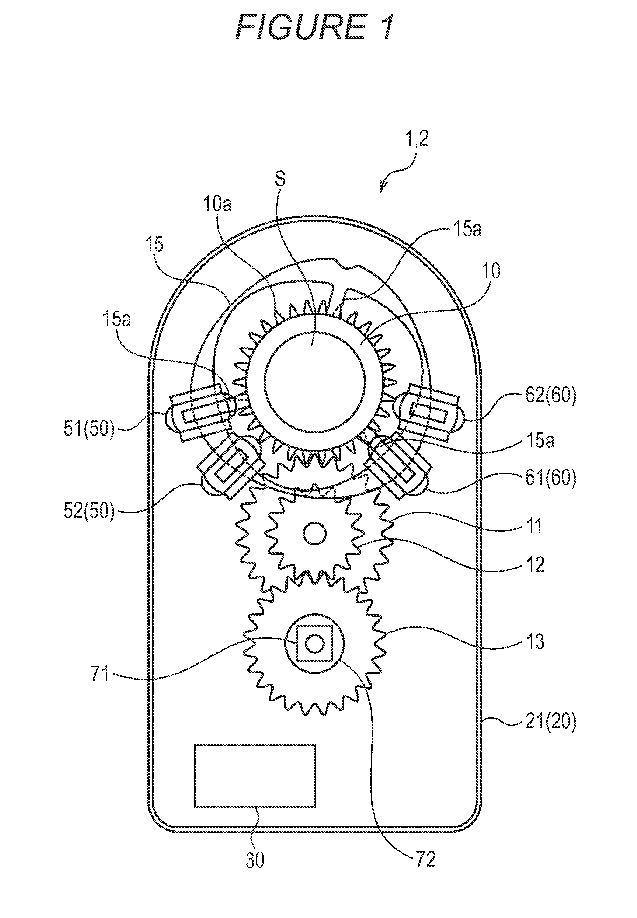

As shown in FIG. 1, the rotation angle detection device 1 according to one embodiment of the present invention comprises a rotor 10 inset to the steering shaft S (simply called as "shaft S" below) and including a gear portion 10a which engages with the first gear 11 on the outer circumference portion, the second gear 12 which is concentric and integrally rotates with the first gear 11, the third gear 13 engaging with the second gear 12, a lower case for rotatably supporting the rotor 10, the first gear 11 and the third gear 13, a upper case (not depicted in the figure) engaging to the lower case 21 to form a box case 20, and the rotation angle detection member 30 for the rotation angle detection according to the present invention.

The rotor 10 is made from synthetic resin which excels in strength and formation. A rotor shield member 15 having board shape whose thickness is, for example, around 0.5 mm is arranged in vicinity of the rotor 10. The rotor shield member 15 is attached to the rotor 10 in the status that support member 15a extends from prescribed position of the inner side in the direction of the rotation shaft of the rotor 10. Otherwise, the support member 15a extends from a prescribed position of the circumference of the rotor 10 so that the rotor shield member 15 having board shape is provided in a ring shape around the rotor 10 with the support member 15a. The rotor shield member 15 is made from conductive material such as brass, silver, aluminum, copper, or the like, whose width is regularly varied from 2 mm to 5 mm at every angle of 120°.

Furthermore, the upper case and lower case 21 which are not depicted in the figure are made from metal having shielding characteristic of alternating magnetic field or shielding material made from magnetic insulation material which excels in strength, and cooperate to form a cabinet for receiving the rotor 10, the rotor shielding member 15, the first gear 11 and the third gear 13. And in the lower case 21, connectors (not depicted in the figure) for supplying electric power to the rotation angle detection device 1 and for transmitting the detection signals of the rotation angle detection device 1 to outside are provided

Furthermore, as shown in FIG. 1, two pairs of coil members 50 and 60 are provided in the upper case and lower case 21. The respective pairs of coil members 50 and 60 consist of coil members 51 and 52 which are arranged at a prescribed angle in the circle direction of the surface perpendicular to the rotation shaft and are oppositely fixed with prescribed distance with the surface perpendicular to the rotating shaft of the rotor shield 15 of the rotor 10 between them. The relation of positions of the rotor shield member 15 and the coil members 50 (51, 52) are substantially similar to the relation of positions shown in FIG. 14 and FIG. 16 of the Patent Document 1 (Japanese Patent Application Publication 2003-202240) described above.

The rotor Shield 15 and the coil members 51 and 52 cooperate to consist of the first detection means. The rotor shield member 15 corresponds to inductance changing means for changing inductance of the coil members 50 and 60 according to the rotation of the rotor 10 as the rotation body to be measured. As described above, the width of the rotor shield member 15 is changed at every angle of 120° so that the variation of the detection signal from the coil members 50 is obtained greater than the actual rotation angle of the rotor 10

And another pair of coil members 60 consists of coil members 61 and 62 which are arranged at a prescribed angle in the circle direction of the surface perpendicular to the rotation shaft and are oppositely fixed with prescribed distance with the surface perpendicular to the rotating shaft the rotor shield 15 of the rotor 10 between them. The rotor shield member 15 and the coil members 61 and 62 cooperate to consist of the same means as the first detection means described above of which the rotor shield 15 and the coil members 51 and 52 consist. Since the first detection means has the configuration that the angle detection means can include redundant system.

As shown in FIG. 1, the two pairs of coil members 50 and 60 are respectively fixed in the circle direction of the rotor shield member 15 at a prescribed angle so that the output values of respective phase shift amounts regarding to the pairs of coil members described below are shifted each other by an angle of 30° (so that the outputs of the inductance changing means described above are located in different positions). As shown in FIG. 1, the outer circle portion of the coil members 50 and 60 has a so-called track shape of track events in a plan view shown in FIG. 1.

The reason why two pairs of coil members, one pair of coil members 50 and another pair of coil members 60, are arranged as described above is that abnormality of the rotation angle detection device 1 can be quickly detected by comparing one pair of coil members 50 to another pair of coil members 60 or the areas formed with support member 15a provided on one portion of the rotor shield member 15 in the circle direction where the rotation angle can not be detected can be complemented by each other in a time of rotation angle detection.

In the present embodiment, one cycle of the rotor shield member 15 is set at an angle of 120° as described below, and one pair of coil members 50 (51 and 52) are arranged so that the phases of the coil members 50 (51 and 52) are shifted by 30° and another pair of coil members 60 (61 and 62) are similarly arranged so that the coil members 60 (61 and 62) are shifted by a prescribed angle in the circle direction. Since one pair of coil members 50 and another coil members 60 have similarity in their basic configurations, in the explanation on the material and mechanism, only one pair of coil members 50 (51 and 52) is explained below.

The coil members 50 include the core bodies made from soft magnetic material having insulation properties such as plastic magnet (for example, mixture soft magnetic material or the like in which PPS (polyphenylene sulfide) is mixed with Mn-Zn soft magnetic ferrite) and the exciting coils wound in the track shaped inner circle portion formed along the outer circle of the core body to be received inside the core body.

And the both exciting coils of the coil members 50 are arranged to be opposed with the rotor shield member 15 between them, and are serially connected to each other and electrically connected to conductive pattern of printed circuit mounted on the rotation angle detection member 30 inside the case in this case. And alternating current is generated in the surroundings by applying alternating exciting current to the exciting coils opposing to each other so that alternating magnetic fields are crossed to the surface perpendicular to the rotating shaft of the rotor shield member between two pairs of core bodies.

Eddy current is generated in the rotor shield member 15 made from conductive material by the alternating magnetic field generated from the coil members 50, eddy current is varied corresponding to the variation of width of the rotor shield member 15 according to the rotation of the rotor 10, and impedance variation is detected based on the variation of eddy current so that the rotation angle of the rotor 10 is detected in a cycle of 120 ° by the respective coil members 50.

The reason why the coil members 50 are arranged to be opposed to each other with the rotor shield member 15 between them is that although, when location of the rotor 10 is shifted toward the axis direction of the shaft by the vibration or the like, outputs from the coil members 50 are respectively varied with this, since output from the coil member arranged on one side of the rotor shield member 15 is increased as much as output from the coil member arranged on another side of the rotor 15 is decreased, variation of outputs from the respective coil members 50 can be offset each other by detecting the outputs from the coil members 50 opposing to each other.

And, at first, for example, when the alternating exciting current is applied to the respective exciting coils of one coil members 50, alternating magnetic field is generated in the surroundings by the respective exciting coils of the coil members 51 and 52, and, at this time, since the magnetic field passes through the rotor shield member 15, eddy current is generated on the surface of the rotor shield member 15 and impedances of the respective exciting coils are varied. Namely, eddy current which is varied by area of the rotor shield member 15 corresponding to the coil members 51 and 52 is varied and is detected as current variation of the exciting coils of the coil members 50. The variation amount of impedance corresponds to the variation amount of eddy current generated on the surface of the rotor shield member 15.

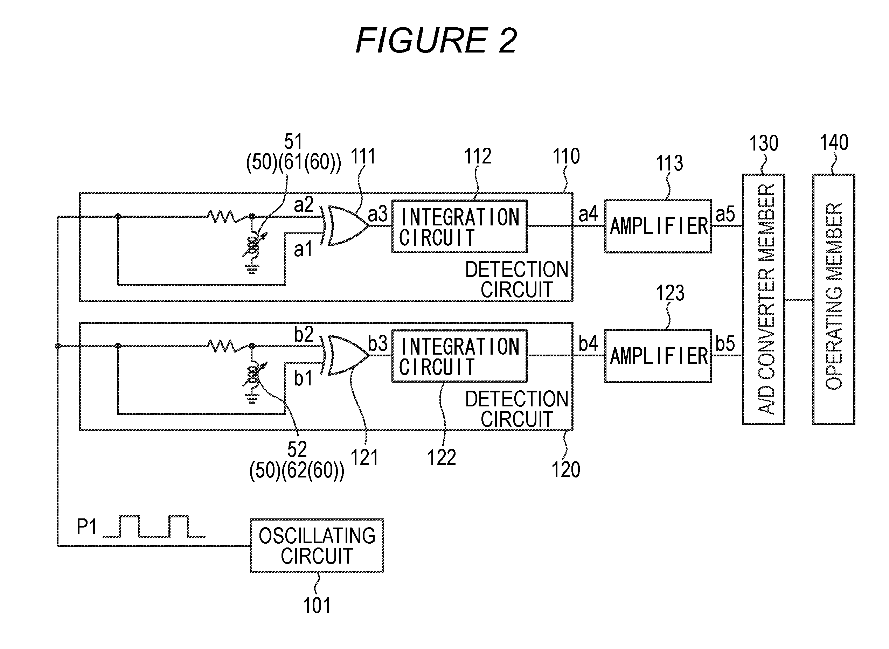

The rotation angle detection member 30 of the rotation angle detection device 1 partially includes the circuits shown in the circuit block diagram of FIG. 2 and the rotation angle is detected based on the signals input to the circuits. In the explanation of the present embodiment, only the rotation angle detection method of the shaft S, namely, the rotor, in use of the assembly of rotor 10, rotor shield member 15 and coil members 50 (60), which especially easily delivers the functions of the present invention is explained and the rotation angle detection method of the third gear 13 in use of the assembly of the third gear 13 and the MR element 72 is explained in the explanation of another embodiment.

The rotation angle detection member 30 includes two detection circuits 110 and 120. Furthermore, it includes the oscillating circuit 101 shown in the lower part of the FIG. 2 for generating reference pulse voltage P1 having rectangular shape. The reference pulse voltage P1 generated by the oscillating circuit 101 is applied to the two detection circuits 110 and 120 respectively.

One detection circuit 110 consists of the detection element members consisting of the exciting coil and resistance of the coil member 51 (61), the exclusive-OR gate 111 and the integration circuit 112 so that the reference pulse voltage P1 at the point a1 input to the detection circuit 110 and the voltage at the point a2 having past through the exciting coil and resistance is processed by the exclusive-OR gate 111 for obtaining the voltage at the point a3. Then the voltage at the point a3 is integrated by the integration circuit 112 and the voltage at the point a4 is obtained, the voltage at the point a4 is amplified by the amplifier 113 and the voltage at the point a5 is obtained, and the voltage at the point a5 is sent to the operating member 140 after being input to the A/D converter member 130 and being converted into a digital signal.

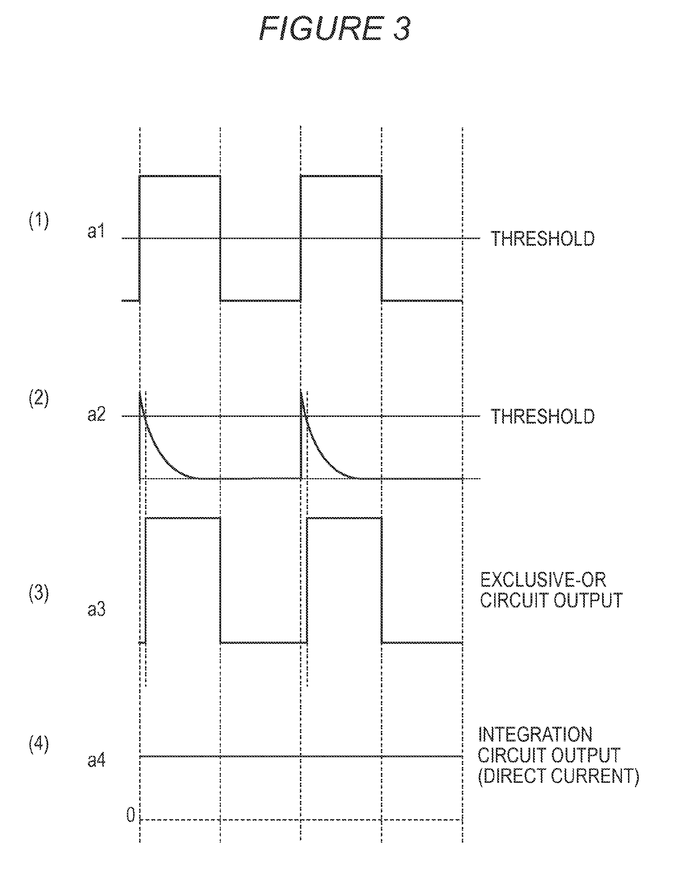

The signal processing relating to the detection circuit 110 is explained in use of the timing chart at the each point shown in FIG. 3. In the FIG. 3, when the reference pulse P1 is added from the oscillating circuit 101, the voltage at the point a1 shows in the timing chart (1). And the voltage at the point a2 obtained after passing through the exciting coil of one coil member 51 (61) shows a rising damping wave having damping properties corresponding to the rotation angle of the rotor 10 by the change of impedance caused by eddy current generated corresponding to the projecting area of the rotor shield member 15 projected on the coil member 51 as shown in the timing chart (2) of FIG. 3. And the rectangular voltage at the point a1 shown in the timing chart (1) and the voltage having the rising damping wave shown in the timing chart (2) are respectively provided with threshold values beforehand and are respectively compared to the threshold values in regard to whether they are larger or smaller than the threshold values so as to become logical values of 0 or 1, whose exclusive-OR of them is taken, and the output of the timing chart (3) is obtained. The output of the timing chart (3) is integrated by the integration circuit 112, amplified by the amplifier 113, converted into a digital signal by the A/D converter member 130, and input to the operating member 140.

Similarly, another detection circuit 120 consists of the detection element members consisting of the exciting coil and resistance of the coil members 52 (62), the exclusive-OR gate 121 and the integration circuit 122 so that the reference pulse voltage P1 at the point b1 input to the detection circuit 120 and the voltage at the point b2 having past through the exciting coil and resistance are processed by the exclusive-OR gate 121 for obtaining the voltage at the point b3. Then the voltage at the point b3 is integrated by the integration circuit 122 and the voltage at the point b4 is obtained, the voltage at the point b4 is amplified by the amplifier 123 and the voltage at the point b5 is obtained, and the voltage at the point b5 is sent to the operating member 140 after being input to the A/D converter member 130 and being converted into a digital signal.

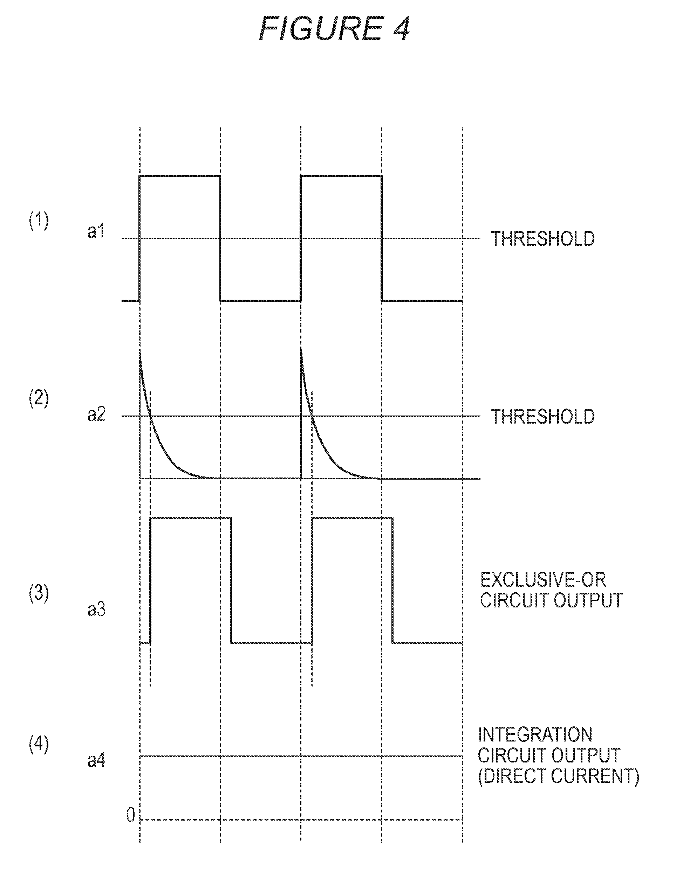

The signal processing relating to the detection circuit 120 is explained in use of the timing chart at the respective points shown in FIG. 4. In the FIG. 4, when the reference pulse P1 is added from the oscillating circuit 101, the voltage at the point a1 shows in the timing chart (1). And the voltage at the point b2 obtained after passing through the exciting coil of one coil member 51 (61) shows a rising damping wave having damping properties corresponding to the rotation angle of the rotor 10 by the change of impedance caused by eddy current generated corresponding to the projecting area of the rotor shield member 15 projected on the coil member 51 as shown in the timing chart (2) of FIG. 4. And the rectangular voltage at the point b1 shown in the timing chart (1) and the voltage having the rising damping wave shown in the timing chart (2) are respectively provided with threshold values beforehand and are respectively compared to the threshold values in regard to whether they are larger or smaller than the threshold values so as to become logical values of 0 or 1, whose exclusive-OR of them is taken, and the output of the timing chart (3) is obtained. The output of the timing chart (3) is integrated by the integration circuit 112, amplified by the amplifier 113, converted into a digital signal by the A/D converter member 130, and input to the operating member 140.

As seen from FIG. 3 and FIG. 4, since the area of the rotor shield member 15 which projects on the coil member 51 and 52 is varied at a particular rotation angle of the rotor, eddy current generated in the rotor shield member 15 is also varied, accompanied by this, impedance of the detection circuits 110 and 120 respectively including the coil members 51 and 52 is varied and the integration values A and B described above are varied.

As described above, when the integration values A and B are input to the operating member 140 at a certain particular angle of the rotor 10 and are memorized in the operating member 140 at each rotation angle of the rotor 10, the outputs SA and SB similar to substantial sin wave whose phases are shifted each other by an angle of 30° can be obtained as shown in FIG. 5 in which the rotation angle of the rotor, namely, the steering shaft S, is shown in horizontal axis. Namely, in the present embodiment, since the coil members 50 are arranged in the case 20 corresponding to the circle direction of the rotor shield member 15 so that the phases of the phase shift amount output signals which can be obtained by the cooperation of the respective coil members 50 and the rotor shield member 15 are shifted each other by an angle of 30°, the output values of the phase shift amount in a cycle of 120° whose phases are shifted each other by an angle of 30° like the phase shift amount output value SA of one coil member 51 and the phase shift amount output value SB of another coil member 52 by means of the signal processing described above as shown in FIG. 5.

The detection method for detecting the rotation angle of the rotor 10 in a cycle of 120° from the output values of the phase shift amounts obtained as described above is described below.

As show in FIG. 5, the output values (SA and SB) of the rotation angle of the rotor 10 obtained from the respective coil members 50 and the output values (RSA and RSB) obtained by respectively reversing SA and SB are overlapped. And which range of angle among the ranges of angle, from 0° to 30°, from 30° to 60°, from 60° to 90°, and from 90° to 120°, the rotation angle of the rotor 10 is in, is judged from whether larger or smaller the respective phase shift amount detection values are. Then the linear portions of the four phase shift amount detection values are used and jointed to each other. Next the rotation angle of the rotor 10 is detected in a cycle of 120° from the output signal having a saw blade shaped wave varied in a cycle of 120° shown in FIG. 6 based on the result of the judgment on which range of angle among four ranges of angle the rotation angle of the rotation body 10 is in.

On the other hand, magnet 71 integrally rotated with the third gear 13 is provided in the center portion of the third gear 13 in the lower case 21, MR element (magnetic flux detection element) 72 for detecting the magnetic flux of the magnet 71 is provided in the portion of the lower case opposing to the magnet 71. And the magnet 71 and the MR element 72 cooperate to compose the second detection means.

In the MR element 72, the detection output is obtained as sin curve shaped detection output and as cos curve shaped detection output, and these detection outputs are converted into the detection output of tan function, and is output as an output signal of a saw blade shaped wave which changes from -112.5° to +112.5°, namely, in a cycle of 225°.

The signal processing method is well-known, for example, as described in Japanese Patent Application Publication2004-53444. The reason why the detection output cycle of the MR element 72 is set at an angle of 225° is, in the case of the present embodiment, respective reduction ratios of the tooth number of the tooth provided on the outer circumference of the rotor 10, tooth number of the first gear 11 engaging to the rotor 10, the tooth number of the second gear 12 which is concentric and integrally rotates with the first gear 11, and the tooth number of the third gear 13 engaging to the second gear 12 are defined. And from the relations of these gear ratios, the cycle of detection signal of the MR element 72 detected corresponding to the rotation of the second gear 12 is set at an angle of 225°.

As described above, in the rotation angle detection device 1 according to the present embodiment, the first detection signal obtained from the first detection means which the coil members 50 and the rotor shield member 15 cooperate to compose is output in a cycle of 120° corresponding to the rotation of the rotor 10 (refer to FIG. 6), and the second detection signal obtained from the second detection means which the magnet 71 and the MR element 72 cooperate to compose is output in a cycle of 225° corresponding to the rotation of the second gear 12. Namely, in the present embodiment, when the output signal of the coil members 50 is increased (decreased) accompanied by the rotation of the shaft S as the rotation body to be measured, the output signal of the MR element 72 is increased (decreased). And, in the rotation angle detection device 1 according to the present invention, although the details of computation algorithm are not explained, absolute rotation angle within the range capable of being detected which is the lowest common denominator of the detection signal of the cycle from 0° to 1800° (from-900° to +900°) is obtained.

There is no limitation to only two fixing cores which are arranged in the cycle direction, this invention is applicable to the case that more than two fixing cores are arranged in the circle direction of the rotor shield member, for example, as the rotation cycle detection device described in Japanese application publication 2003-202240. In this case, the all phases of alternating current exciting the exciting coils of the fixing cores are preferably different from each other.

And the fixing cores need not to be arranged as a pair of fixing cores opposing to each other with the rotor shield member of the rotor between them (not depicted in the present embodiment). However, since respective fixing cores are oppositely arranged with the rotor shield member of the rotor between them, respective fixing cores can offset the variation of the output properties caused by the vibration each other and the rotation angle detection which excels in vibration resistance performance can be done, and, accordingly, the opposing arrangement of the respective fixing cores with rotor shield member between them is preferable.

And, in the case that the rotation angle of wide range need not to be obtained unlike the present embodiment, the rotation angle detection device can have the configuration that only one pair of coil members is provided in the rotor shield member. In this case, two pairs of the detection circuits need not to be provided unlike the present embodiment, and only one pair of the detection circuits is enough to be used.

And in the case that the support member of the rotor shield member is not made from conductive material, since there is no the area where the rotation angle can not be detected, not two pairs of the coil members but only one pair of the coil members can be provided.

As explained above, in the rotation angle detection device according to the present invention, serial resonance circuits of RLC consisting of resistances, coils and condensers are not provided as the detection element members, the rotation angle is detected based on the comparison between the outputs of the detection circuits including the detection element members into which resistances and coils are assembled and the voltage of the reference pulse.

Accordingly, the condensers which can be the factors of accident error of the output signal caused by the variations of initial properties or the temperature properties need not to be used in the detection element means and accident error of the rotation angle caused by the change of temperature in vicinity of the rotation angle detection device can be minimized. As a result, in the case that the rotation angle detection device is attached under the circumstances that the change of the temperature is great such as in vehicle or the like, the rotation angle can be stably and accurately detected.

And in the case of the rotation angle detection device including the resonance circuits consisting of RLC circuits, although the reference pulse voltage after passing through the RLC circuits show sin wave at the time of rotation angle detection whose phase is easily changed by the temperature properties of condensers and accident error of the rotation angle detection is caused, in the case of the present invention, since the detection circuits including the detection element members consisting of the RL circuits instead of the RLC circuits, the voltage wave of the reference pulse voltage having past through the RL circuits digitally rises at the same time as the reference pulse voltage rises, and, accordingly, the change of temperature in vicinity of the rotation angle detection device hardly affects the rotation angle detection.

And since the condensers are not used in the detection element members, number of parts in the rotation angle detection device can be reduced, the logical circuits and the amplifying circuits can be simplified and cost down of the rotation angle detection device can be achieved.

Although the rotation angle detection method according to the present embodiment is explained based on the rotation angle detection method in use of the assembly of the rotor, the rotor shield member and the coil members, there is no limitation to the assembly of configuration components as far as it deliver the function of the present invention, and the assembly of another configuration components can be naturally used, as far as they are suitable for the rotation angle detection.

Especially, the rotation angle detection device according to the present invention is suitable for the rotation angle detection of a steering device for vehicle which is significantly affected by vibration. However, the rotation angle detection device is applicable for obtaining relative rotation angle or rotation torque between rotating shafts which rotates with vibration such as robot arms.

## Claims

1. A rotation angle detection device, comprising:
angle detection means including detection circuits including detection element members consisting of coils and resistances, and inductance changing means for changing inductance of said coils corresponding to rotation of a rotation body to be measured;
reference pulse voltage generating means for making said detection circuits generate output signals; and operating means for calculating output signals of said detection circuits,
wherein reference pulse voltage generated by said reference pulse voltage means and output voltages of said detection circuits output when said reference pulse voltage is input are compared for calculating rotation angle of said rotation body to be measured.
